# EUROPÄISCHE PATENTSCHRIFT

(11) **EP 0 796 554 B1**
(45) Veröffentlichungstag und Bekanntmachung des Hinweises auf die Patenterteilung: **06.06.2001**
(21) Anmeldenummer: 97104119.9
(22) Anmeldetag: 12.03.1997
(51) Int. Cl.: A01C 17/00

(54) **Schleuderstreuer, insbesondere Strassenstreuer**
Broadcaster
Epandeur centrifuge

(30) Priorität: 18.03.1996 DE 19610335; 02.08.1996 DE 19631253
(43) Veröffentlichungstag der Anmeldung: 24.09.1997
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- EP-A- 0 194 733
- DE-A- 1 557 961
- FR-A- 1 569 216

## Beschreibung

Die Erfindung betrifft einen Schleuderstreuer, insbesondere Straßenstreuer gemäß des Oberbegriffes des Patentanspruches 1.

Derartige Schleuderstreuer sind in der Praxis im Einsatz haben sich bewährt. So ist beispielsweise durch den Prospekt Amazone Streugeräte für den Winterdienst mit Druckvermerk D 569(D) 10.95 ein Einscheibenschleuderstreuer, der als Straßenstreuer eingesetzt wird, bekannt. Dieser Schleuderstreuer zeichnet sich durch seine einfache Konstruktion und seinen einfachen Aufbau aus. Nachteilig ist jedoch bei diesen bekannten Schleuderstreuern, daß die Dosiereinheit zur Reinigung und Pflege nicht mit Hilfe von Schnellverschlüssen vom Vorratsbehälter abgenommen werden kann.

Desweiteren ist durch die DE-OS 14 57 837 eine Vorrichtung zum Ausstreuen von körnigen oder pulverigen Material bekannt. Diese als Schleuderstreuer ausgebildete Vorrichtung weist einen Vorratsbehälter auf, der mittels eines Schnellverschlußes am Rahmen der Maschine befestigt ist. Hierdurch ist es mit einigen Handgriffen möglich, den Vorratsbehälter zunächst zu demontieren, wobei jedoch berücksichtigt werden muß, daß die Demontage des Vorratsbehälters nur von zwei Personen durchgeführt werden kann. Nach der Demontage des Vorratsbehälters kann die Dosiereinheit zur Reinigung zerlegt werden. Nachteilig ist bei diesem bekannten Streuer also, daß der Vorratsbehälter zur Demontage der Dosiereinheit in unbequemer Weise abgenommen werden muß.

Desweiteren ist durch die DE-OS 19 57 634 ein weiterer Schleuderstreuer bekannt, bei dem ebenfalls nach Demontage des Vorratsbehälters die Dosiereinheit zwecks Reinigung abzunehmen ist.

Ein weiterer Schleuderstreuer ist durch die FR-A-15 69 216 bekannt. Bei dem Schleuderstreuer gemäß dieser Druckschrift ist das Rührorgan mit der Nabe von der bis in den Vorratsbehälter ragenden Antriebswelle nach Entfernung eines Sicherungsstiftes abzunehmen. Anschließend läßt sich die Platte und die Scheibe aus dem Vorrtsbehälter entnehmen.

Der Erfindung liegt nun die Aufgabe zugrunde, den gattungsgemäßen Schleuderstreuer hinsichtlich einer einfachen und leichten Wartung sowie Reinigung erheblich zu verbessern.

Diese Aufgabe wird erfindungsgemäß durch die kennzeichnenden Merkmale des Patentanspruches 1 gelöst. Infolge dieser Maßnahmen ist es möglich, daß nach Demontage des Rührorgans in einfachster Weise die Dosiereinheit vom Vorratsbehälter in bequemer Weise abzunehmen bzw. wieder anzubringen ist.

Eine einfache Bauweise läßt sich dadurch erreichen, daß die Dosiereinheit von der Rührwelle zentriert wird. Hierdurch ist immer eine genaue und exakte Zuordnung zwischen Dosiereinheit und Schleuderscheibe gewährleistet.

Eine einfache Ausbildung der Dosiereinheit sowie eine bequeme und gute Reinigung des Schiebers läßt sich durch die Maßnahmen gemäß des Anspruches 3 erreichen.

Eine gute Zentrierung des Dosierelementes und des Schiebers wird dadurch gewährleistet, daß das Dosierelement und der Schieber eine zentrale Bohrung aufweisen, und daß durch diese zentrale Bohrung die Rührwelle geführt ist.

Um einen Verschleiß des Dosierelementes, insbesondere des Schiebers und des Dosierelementes sowie der Rührwelle bzw. des Kupplungselementes des Rührorgans auszuschließen, ist erfindungsgemäß vorgesehen, daß in der zentralen Bohrung des Dosierelementes und des Schiebers eine als Verschleißelement ausgebildete Hülse angeordnet ist, und daß durch diese Hülse die Rührwelle sich erstreckt. Mittels der Hülse und der Rührwelle wird das Dosierelement und der Schieber zentriert und in ihrer vorgesehenen Position gehalten.

Eine einfache Anordnung der Dosiereinheit an dem Vorratsbehälter wird mittels Federelementen erreicht, so daß die Dosiereinheit federnd am Vorratsbehälter angeordnet ist. Hierbei können die Federelemente als Zugfedern oder Gummischnüre etc. ausgebildet sein, welche mittels Schnellverschlüssen am Vorratsbehälter und/oder der Dosiereinheit befestigt sind.

Um auch bei Schleuderstreuern, bei denen eine Streubreitenbegrenzungseinrichtung am Rahmen und/oder Vorratsbehälter angeordnet ist, eine einfache Montage und Demontage sowie Zugänglichkeit der Dosiereinheit sicherzustellen, ist die Streubreitenbegrenzungseinrichtung unterhalb der unteren Ebene der Dosiereinheit angeordnet.

Eine einfache Einstellung des Streubildes sowie Verlagerung des Aufgabepunktes des auszubringenden Materials auf der Schleuderscheibe wird dadurch erreicht, daß die Dosiereinheit mittels einer Stelleinrichtung um die Rührwerksachse verschwenkbar angeordnet und in unterschiedlichen Positionen fixierbar ist. Hierbei ist, um eine gute Zugänglichkeit der Stelleinrichtung zu gewährleisten, vorgesehen, daß die Stelleinrichtung auf der den Ankupplungselementen zum Anbau einer an einer Zugmaschine abgewandten Seite angeordnet ist.

Eine vorteilhafte Anordnung ergibt sich dadurch, daß die Dosierplatte unmittelbar an den unteren Bereich des Vorratsbehälters anschließt. Hierdurch wird vermieden, daß Material zwischen der Bodenplatte und der Dosierplatte gelangt, so daß eine Verstellung der Dosierplatte gegenüber dem Vorratsbehälter und der Bodenplatte leicht möglich ist.

Um eine ausreichend genaue Führung der Dosierplatte gegenüber dem Vorratsbehälter und der Schleuderscheibe zu erreichen, ist vorgesehen, daß die Dosierplatte Führungselemente aufweist, welche außerhalb des Vorratsbehälters angeordnet sind und an einer äußeren Ringfläche des Vorratsbehälters zur Anlage kommen.

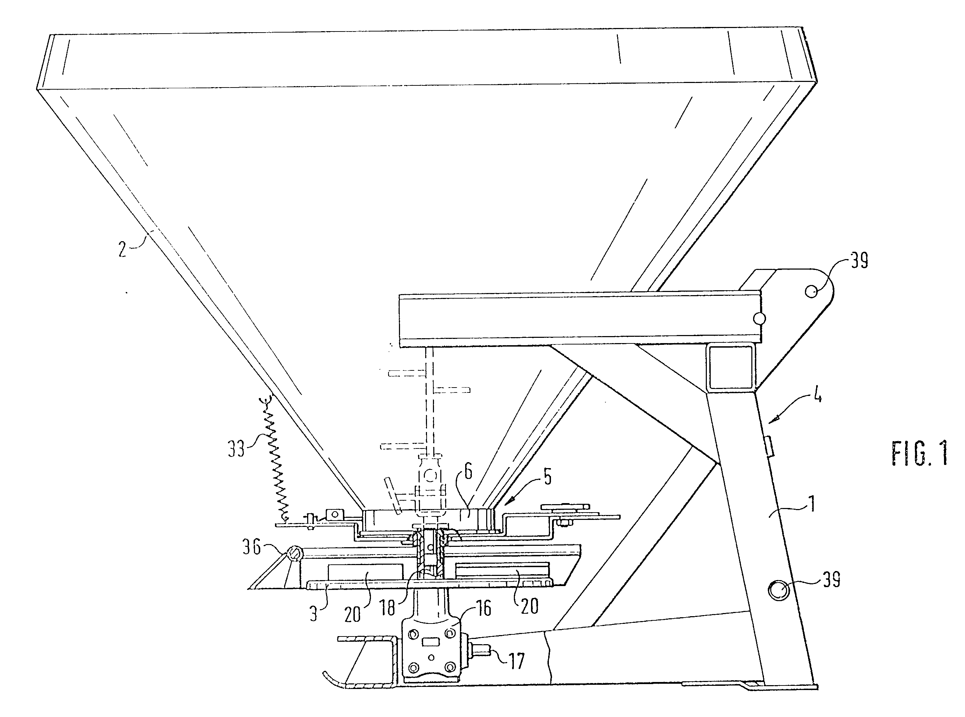

Weitere Einzelheiten der Erfindung sind den übrigen Unteransprüchen, der Beispielsbeschreibung und den Zeichnungen zu entnehmen. Hierbei zeigen
- Fig.1: den Schleuderstreuer in Seitenansicht und Teilschnitt,

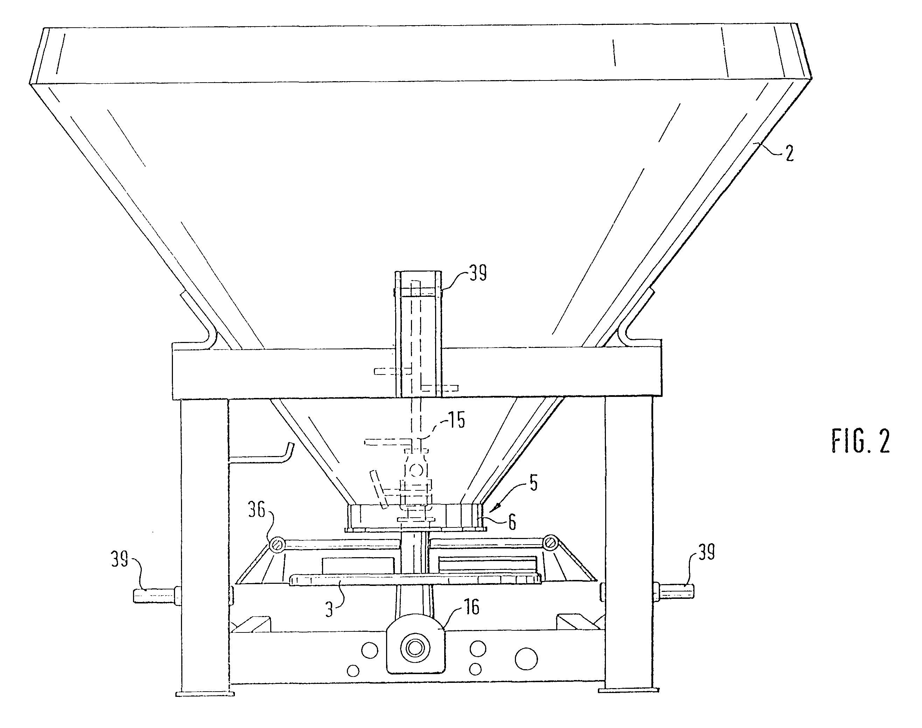

- Fig.2: den Schleuderstreuer in Rückansicht,

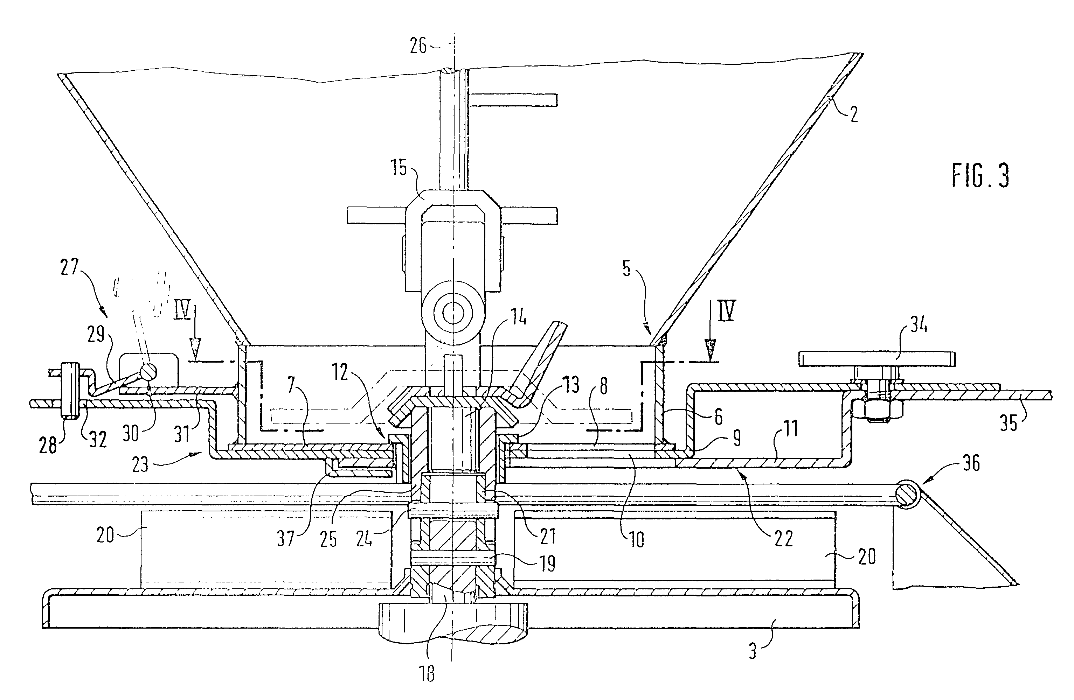

- Fig.3: den unteren Bereich des Schleuderstreuers in Seiten- und Teilansicht und in vergrößerten Maßstab,
- Fig.4: den Dosierbereich des Schleuderstreuers in der Ansicht IV-IV,

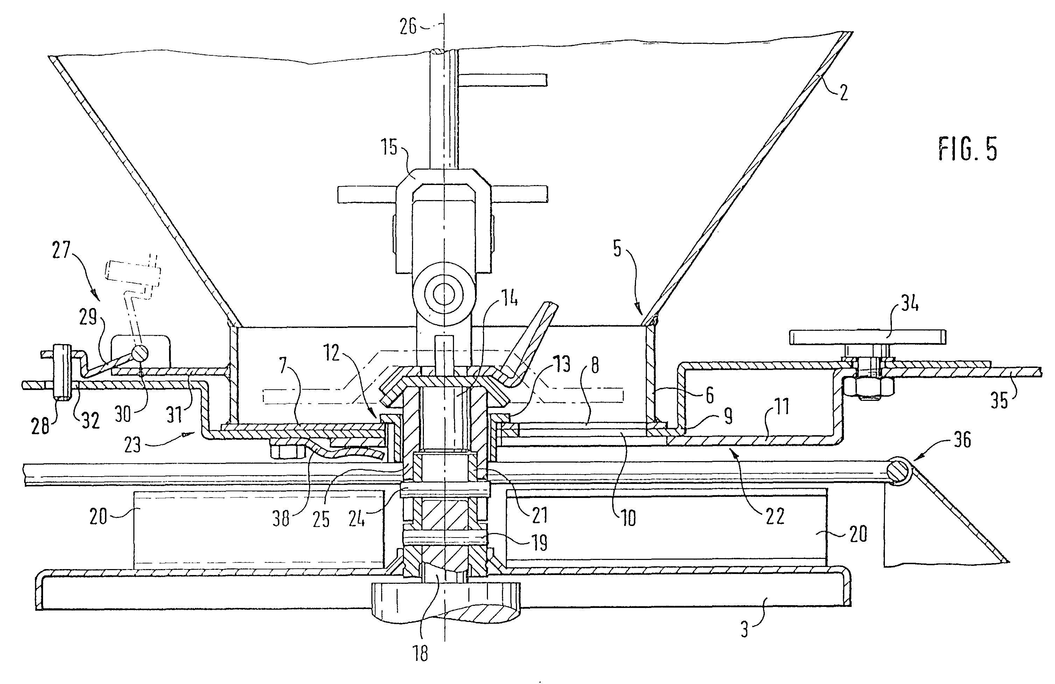

- Fig.5: einen weiteren unteren Bereich des Schleuderstreuers in der Ansicht gemäß Fig.3,
- Fig.6: einen weiteren Schleuderstreuer in Seitenansicht und Teilschnitt,
- Fig.7: den Schleuderstreuer gemäß Fig.6 in Rückansicht,
- Fig.8: den unteren Bereich des Schleuderstreuers in Seiten- und Teilansicht und in vergrößerten Maßstab des Streuers gemäß Fig.6,
- Fig.9: den Dosierbereich des Schleuderstreuers gemäß Fig.6 in der Ansicht IV-IV und
- Fig.10: die Einzelheit V.

Der Schleuderstreuer weist den Rahmen 1, den Vorratsbehälter 2 sowie die rotierend angetriebene Schleuderscheibe 3 auf. Der Schleuderstreuer ist als Einscheibenstreuer ausgebildet und wird gemäß des Ausführungsbeispieles als Straßenstreuer zum Ausstreuen von Salz, Sand, Kies, Splitt etc. eingesetzt. Auf der Vorderseite 4 des Rahmens 1 sind Dreipunktkupplungselemente 5 zum Ankuppeln des Schleuderstreuers an den nicht dargestellten Dreipunktkraftheber einer ebenfalls nicht dargestellten Zugmaschine angeordnet. Der Vorratsbehälter 2 ist trichterförmig ausgebildet und weist an seinem unteren Ende 5 den zylinderförmigen Auslaufbereich 6 auf. An diesem Auslaufbereich 6 ist die Bodenplatte 7 mit der nierenförmigen Durchtrittsöffnung 8 mittels einer Schweißverbindung befestigt. Unterhalb der Bodenplatte 7 ist die Dosierplatte 9 mit der Auslauföffnung 10 angeordnet, welche durch den darunter angeordneten Schieber 11 in Ihrer Öffnungsweite einzustellen und wunschweise zu verschließen ist. Die Bodenplatte 7, die Dosierplatte 9 und der Schieber 11 weisen die zentrale Bohrungen 12 auf, in welcher sich die Hülse 13 befindet, welche als Verschleißteil ausgebildet ist. Durch diese Hülse 13 ist die Antriebswelle 14 für das Rührorgan 15 in den Vorratsbehälter 2 hineingeführt.

Am Rahmen 1 ist das Winkelgetriebe 16 angeordnet, an dessen vorderer Welle 17 eine nicht dargestellte Gelenkwelle zum Anschluß an die Zapfwelle eines den Streuer tragenden Schleppers angeschlossen wird. Auf der senkrechten Ausgangswelle 18 des Winkelgetriebes 16 ist mittels der Bolzenverbindung 19 die Schleuderscheibe 3 drehfest angeordnet. Auf der Schleuderscheibe 3 sind die Wurfschaufeln 20 unterschiedlicher Länge angeordnet. Die Nabe 21 der Schleuderscheibe 3 ist nach oben verlängert, sie endet jedoch unterhalb der unteren Ebene 22 der aus Dosierplatte 9 und Schieber 11 bestehenden Dosiereinheit 23. In der Nabe 21 ist der Bolzen 24 angeordnet, der mit dem Anschlußstück 25 des Rührwerkes 15, welches durch die Verschleißhülse 13 gesteckt ist, in Form eines Bajonettverschlußes zusammenwirkt. Somit kann also das Rührwerk 15 nach Öffnen des Bajonettverschlußes nach oben herausgezogen werden. Die Dosierplatte 9 und der Schieber 11 werden durch die Verschleißhülse 13 und der Rührwerksantriebswelle 14 zentriert.

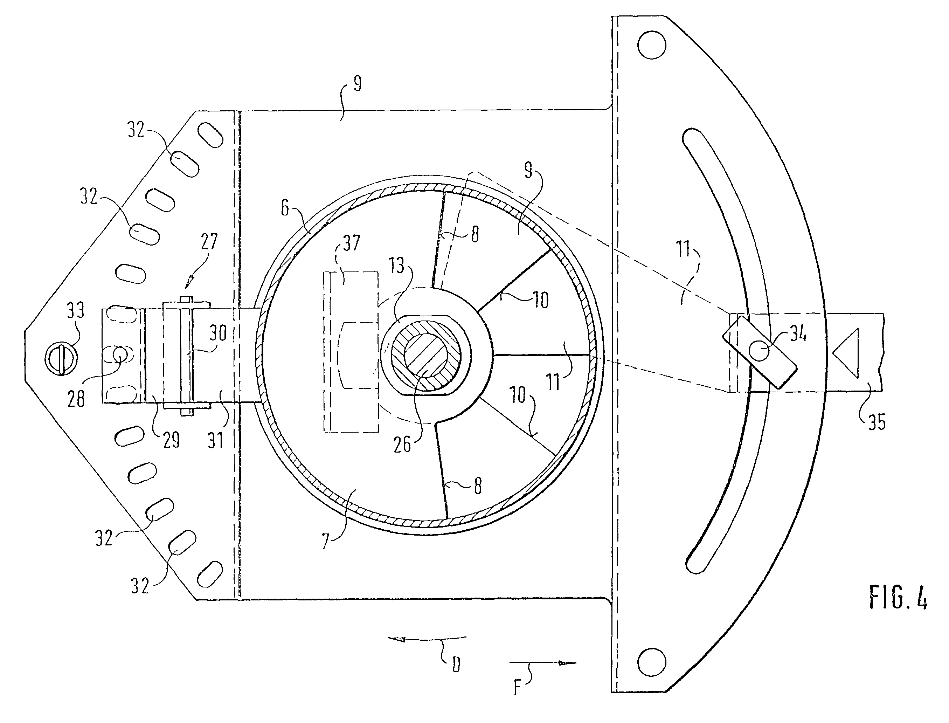

Die Dosierplatte 9 ist um die Achse 26 der Antriebswelle 4 für die Schleuderscheibe 3 und des Rührwerkes 15 verschwenkbar und in verschiedenen Positionen festsetzbar, so daß der Aufgabepunkt des Materials auf die Schleuderscheibe 3 veränderbar und einstellbar ist. Gleichzeitig mit der Verschwenkung der Dosierplatte 9 wird auch der Schieber 11 verschwenkt. Die Position der Dosierplatte 9 wird durch den Einstellmechanismus 27, der durch den klappbaren Bolzen 28, der mittels eines Hebelarmes 29 und Gelenkes 30 an einer an dem Vorratsbehälter 2 befestigten Halterung 31 schwenkbar befestigt ist, festgelegt. Der Bolzen 28 kann wahlweise in einer der in Fig.4 dargestellten Bohrungen 32 gesteckt werden.

Die von der Dosierplatte 9 und dem Schieber 11 gebildete Dosiereinheit 23 wird mittels der Federelemente 33, die als Zugfedern und Gummischnüre ausgebildet sein können, die mittels Schnellverschlüssen am Vorratsbehälter 2 und der Dosiereinheit 23 befestigt sind, federnd gegen die Bodenplatte 7 bzw. den Vorratsbehälter 2 gedrückt bzw. gezogen.

Die Größe der Auslauföffnung 10 wird durch den Schieber 11 eingestellt, in dem die als Schnellverschluß ausgebildete Knebelschraube 34 gelöst und in der vorgesehenen Position des Schiebers wieder festgezogen wird. Es ist vorgesehen, insbesondere wenn Sand, Splitt oder Kies ausgebracht wird, daß keine Betätigungsmittel am Schieber 11 angeordnet sind, sondern der Schieber 11 in einer Position fest eingestellt wird, und weil das Material erst ausfließt, wenn der Schleuderscheiben- und Rührwerksantrieb eingeschaltet sind und somit die Schleuderscheibe 3 und das Rührwerk 15 angetrieben werden. Wahlweise kann jedoch an dem Hebel 35 des Schiebers 11 ein Betätigungselement, beispielsweise ein Handhebel oder Elektromotor bzw. Hydraulikzylinder angeordnet werden, so daß über den Schieber 11 die Auslauföffnung geschlossen bzw. in der vorgesehenen Weise geöffnet wird.

An dem Rahmen 1 des Streuers ist weiterhin eine Streubreitenbegrenzungseinrichtung 36 angeordnet. Die Streubreitenbegrenzungseinrichtung ist unterhalb der unteren Ebene 22 der Dosiereinheit 23 angeordnet.

Damit eine einfache Reinigung und Pflege der Dosiereinheit 23 ohne schwere körperliche Arbeit möglich ist, ist die Dosiereinheit 23 ohne Abnahme oder Demontage der Schleuderscheibe 3 abnehmbar. Hierzu wird über den Bajonettverschluß die Verbindung zwischen der Schleuderscheibenantriebswelle 14 bzw. der Nabe der Schleuderscheibe 3 und dem Rührwerk 15 über den Bajonettverschluß gelöst. Dann kann das Rührwerk 15 nach oben aus dem Vorratsbehälter 2 herausgezogen werden. Anschließend wird die Verschleißhülse 13 entfernt. Nach Lösen der Schnellverschlüsse, die die Dosierplatte 9 federnd gegen den Vorratsbehälter 2 ziehen, kann die Dosierplatte 9 und der Schieber 11 seitlich bzw. nach hinten unterhalb des Vorratsbehälters 1 und oberhalb der Schleuderscheibe 3 und der Streubreitenbegrenzung 36 herausgezogen werden. Desweiteren ist es möglich, ohne die Schnellverschlüsse, die die Dosierplatte 9 am Vorratsbehälter 2 halten durch Lösen der Schraube 34, nur den Schieber abzunehmen.

Bei dem Ausführungsbeispiel gemäß Fig.4 ist die Gegenhalterung 37 für den Schieber 11 durch eine federnde Halterung 38 ersetzt, so daß der Schieber 11 federnd gegen die Dosierplatte 9 gedrückt wird. Es ist auch möglich, den Schieber 11 selbst federnd aus Federmaterial auszubilden.

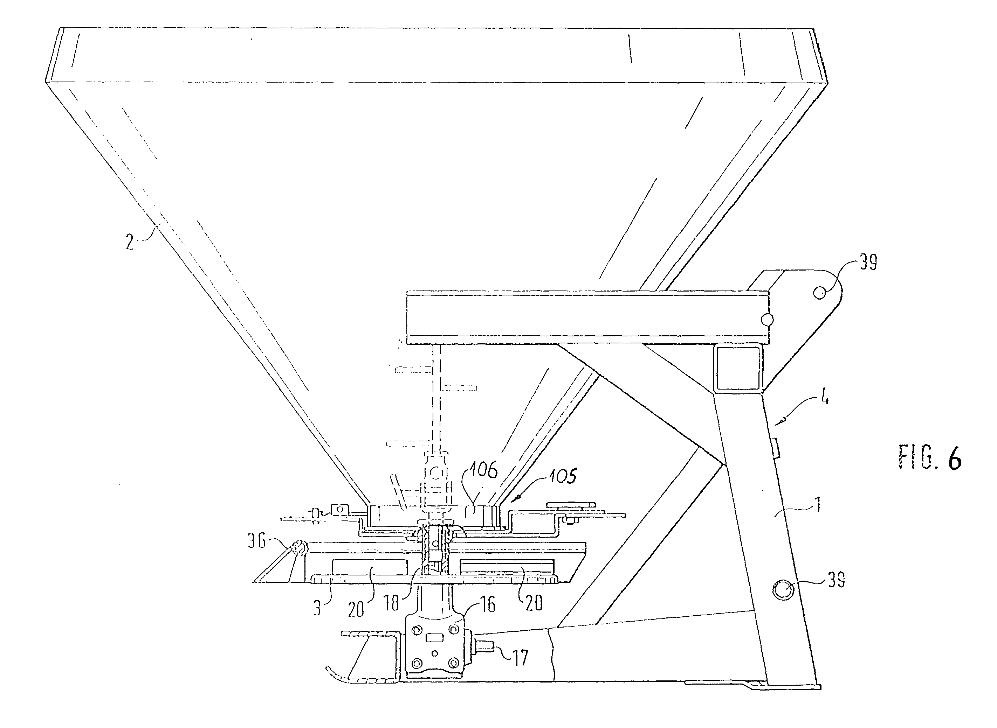

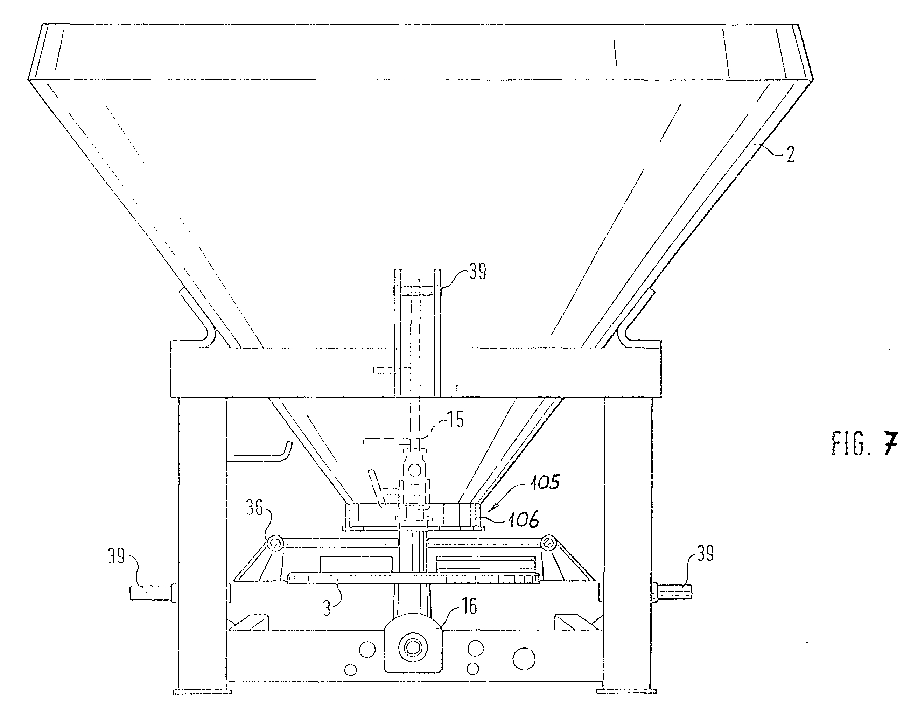

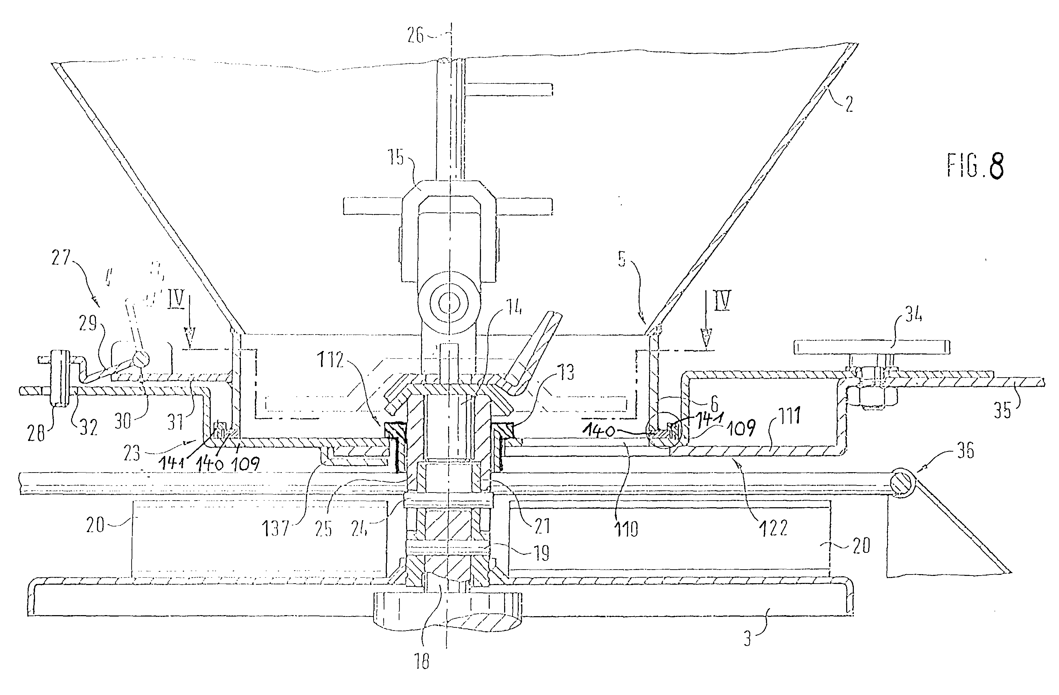

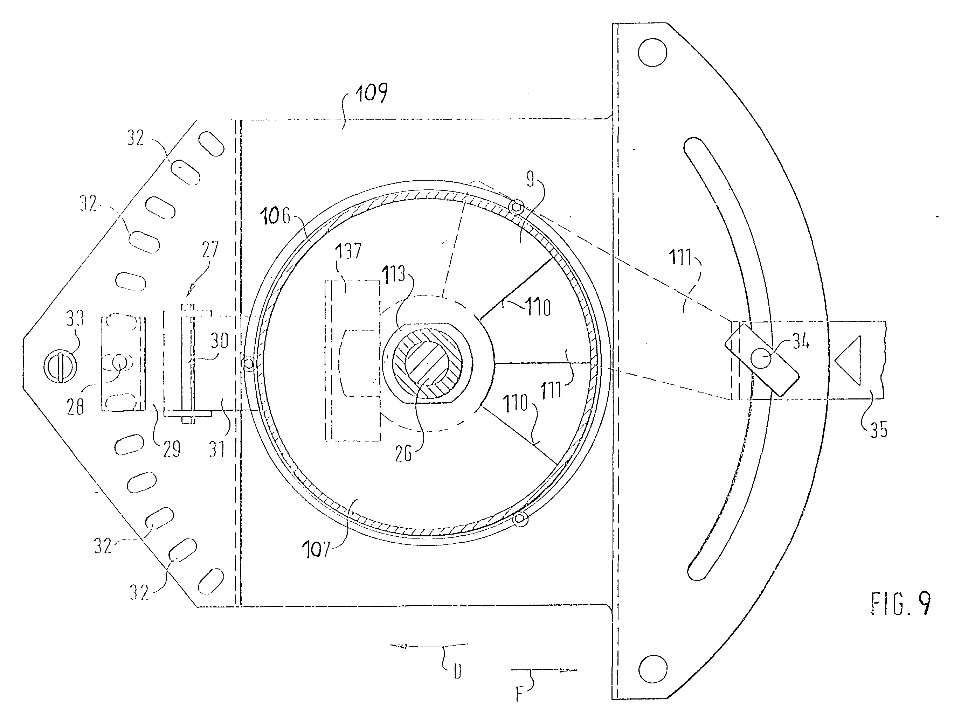

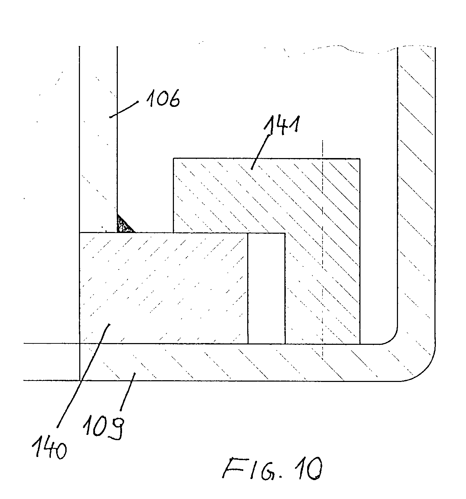

Der Schleuderstreuer gemäß dem Fig. 6-10 weist den Rahmen 1, den Vorratsbehälter 2 sowie die rotierend angetriebene Schleuderscheibe 3 auf. Der Schleuderstreuer ist als Einscheibenstreuer ausgebildet und wird gemäß des Ausführungsbeispieles als Straßenstreuer zum Ausstreuen von Salz, Sand, Kies, Splitt etc. eingesetzt. Auf der Vorderseite 4 des Rahmens 1 sind Dreipunktkupplungselemente 39 zum Ankuppeln des Schleuderstreuers an den nicht dargestellten Dreipunktkraftheber einer ebenfalls nicht dargestellten Zugmaschine angeordnet. Der Vorratsbehälter 2 ist trichterförmig ausgebildet und weist an seinem unteren Ende 105 den zylinderförmigen Auslaufbereich 106 auf. An diesem Auslaufbereich 6 ist der ringförmige Kragen 140 mittels einer Schweißverbindung befestigt. Dieser Kragen 140 bildet somit eine untere äußere Ringfläche des Vorratsbehälters 2. Unterhalb des Kragens 140 ist die Dosierplatte 109 mit der Auslauföffnung 110 angeordnet, welche durch den darunter angeordneten Schieber 111 in Ihrer Öffnungsweite einzustellen und wunschweise zu verschließen ist. Die Dosierplatte 109 und der Schieber 111 weisen die zentrale Bohrungen 12 auf, in welcher sich die Hülse 113 befindet, welche als Verschleißteil ausgebildet ist. Durch diese Hülse 13 ist die Antriebswelle 14 für das Rührorgan 15 in den Vorratsbehälter 2 hineingeführt. Mittels dieser Hülse 113 und der Antriebswelle 14 werden die Dosierplatte 9 und der Schieber 11 zentriert.

Am Rahmen 1 ist das Winkelgetriebe 16 angeordnet, an dessen vorderer Welle 17 eine nicht dargestellte Gelenkwelle zum Anschluß an die Zapfwelle eines den Streuer tragenden Schleppers angeschlossen wird. Auf der senkrechten Ausgangswelle 18 des Winkelgetriebes 16 ist mittels der Bolzenverbindung 19 die Schleuderscheibe 3 drehfest angeordnet. Auf der Schleuderscheibe 3 sind die Wurfschaufeln 20 unterschiedlicher Länge angeordnet. Die Nabe 21 der Schleuderscheibe 3 ist nach oben verlängert, sie endet jedoch unterhalb der unteren Ebene 22 der aus Dosierplatte 109 und Schieber 111 bestehenden Dosiereinheit 23. In der Nabe 21 ist der Bolzen 24 angeordnet, der mit dem Anschlußstück 25 des Rührwerkes 15, welches durch die Verschleißhülse 113 gesteckt ist, in Form eines Bajonettverschlußes zusammenwirkt. Somit kann also das Rührwerk 15 nach Öffnen des Bajonettverschlußes nach oben herausgezogen werden. Die Dosierplatte 109 und der Schieber 111 werden durch die Verschleißhülse 113 und der Rührwerksantriebswelle 14 zentriert.

Die Dosierplatte 109 ist um die Achse 26 der Antriebswelle 4 für die Schleuderscheibe 3 und des Rührwerkes 15 verschwenkbar und in verschiedenen Positionen festsetzbar, so daß der Aufgabepunkt des Materials auf die Schleuderscheibe 3 veränderbar und einstellbar ist. Gleichzeitig mit der Verschwenkung der Dosierplatte 9 wird auch der Schieber 11 verschwenkt. Die Position der Dosierplatte 109 wird durch den Einstellmechanismus 27, der durch den klappbaren Bolzen 28, der mittels eines Hebelarmes 29 und Gelenkes 30 an einer an dem Vorratsbehälter 2 befestigten Halterung 31 schwenkbar befestigt ist, festgelegt. Der Bolzen 28 kann wahlweise in einer der in Fig.4 dargestellten Bohrungen 32 gesteckt werden.

Die von der Dosierplatte 109 und dem Schieber 111 gebildete Dosiereinheit 23 wird mittels der drei Führungselemente 141 an dem Kragen 140 und somit an dem Vorratsbehälter 2 befestigt. Die Führungselemente 141 sind mittels geeigneter Befestigungselemente an der Dosierplatte 9 befestigt. Die Führungselemente 141 sind außerhalb des Vorratsbehälters 2 angeordnet und greifen krallenartig auf die Oberseite des Kragens 140. Die Führungselemente 141 sind so angeordnet, daß die Dosiereinheit auf den Kragen 140 leicht aufschiebbar und somit in einfacher Weise am Vorratsbehälter zu befestigen und zu demontieren ist.

Die Größe der Auslauföffnung 110 wird durch den Schieber 111 eingestellt, in dem die als Schnellverschluß ausgebildete Knebelschraube 34 gelöst und in der vorgesehenen Position des Schiebers wieder festgezogen wird. Es ist vorgesehen, insbesondere wenn Sand, Splitt oder Kies ausgebracht wird, daß keine Betätigungsmittel am Schieber 11 angeordnet sind, sondern der Schieber 111 in einer Position fest eingestellt wird, und weil das Material erst ausfließt, wenn der Schleuderscheiben- und Rührwerksantrieb eingeschaltet sind und somit die Schleuderscheibe 3 und das Rührwerk 15 angetrieben werden. Wahlweise kann jedoch an dem Hebel 35 des Schiebers 111 ein Betätigungselement, beispielsweise ein Handhebel oder Elektromotor bzw. Hydraulikzylinder angeordnet werden, so daß über den Schieber 111 die Auslauföffnung geschlossen bzw. in der vorgesehenen Weise geöffnet wird.

An dem Rahmen 1 des Streuers ist weiterhin eine Streubreitenbegrenzungseinrichtung 36 angeordnet. Die Streubreitenbegrenzungseinrichtung ist unterhalb der unteren Ebene 22 der Dosiereinheit 23 angeordnet.

Damit eine einfache Reinigung und Pflege der Dosiereinheit 23 ohne schwere körperliche Arbeit möglich ist, ist die Dosiereinheit 23 ohne Abnahme oder Demontage der Schleuderscheibe 3 abnehmbar. Hierzu wird über den Bajonettverschluß die Verbindung zwischen der Schleuderscheibenantriebswelle 14 bzw. der Nabe der Schleuderscheibe 3 und dem Rührwerk 15 über den Bajonettverschluß gelöst. Dann kann das Rührwerk 15 nach oben aus dem Vorratsbehälter 2 herausgezogen werden. Anschließend wird die Verschleißhülse 113 entfernt. Jetzt kann die Dosierplatte 109 und der Schieber 111 seitlich bzw. nach hinten unterhalb des Vorratsbehälters 1 und oberhalb der Schleuderscheibe 3 und der Streubreitenbegrenzung 36 herausgezogen werden.

## Patentansprüche

1. Schleuderstreuer, insbesondere Straßenstreuer für den Kommunal- und Winterdienst, mit einem Rahmen und einem Vorratsbehälter, in dessen Bodenbereich eine Dosiereinheit angeordnet ist, und mit einer unterhalb der Dosiereinheit angeordneten, rotierend angetriebenen, mit Wurfelementen besetzten Schleuderscheibe, die auf einer Antriebswelle drehfest angeordnet ist, wobei mit dem oberen Ende der Antriebswelle mittels eines Bajonettverschlußes ein sich im Vorratsbehälter befindliches Rührorgan verbunden ist, wobei die Dosiereinheit lösbar mit dem unteren Bereich des Vorratsbehälters verbunden ist, dadurch gekennzeichnet, daß die Antriebswelle (14, 18) unterhalb der unteren Dosiereinheitsebene (22) endet, daß die Dosiereinheit (23) unterhalb des Vorratsbehälters (2) an diesem angeordnet ist, und zwar derart, daß sie ohne Demontage des Vorratsbehälters (2) vom Vorratsbehälter (2) seitlich bzw. nach hinten durch Herausziehen zwischen Vorratsberhälter (2) und Schleuderscheibe (3) abnehmbar und an diesem anbringbar sowie leicht zugänglich angeordnet ist.

2. Schleuderstreuer nach Anspruch 1, dadurch gekennzeichnet, daß die Dosiereinheit (23) von der Rührwelle (14) zentriert wird.

3. Schleuderstreuer nach Anspruch 1, dadurch gekennzeichnet, daß die Dosiereinheit (23) aus einem eine oder mehrere Auslauföffnungen (10) aufweisenden Dosierelement (9), beispielsweise Dosierplatte, und einem die Auslauföffnung(en) (10) verschließenden und in ihrer Öffnungsweite einstellenden Schieber (11) besteht, daß der Schieber (11) leicht lös- und abnehmbar an dem Dosierelement (9) angeordnet ist.

4. Schleuderstreuer nach einem oder mehreren der vorstehenden Ansprüche, dadurch gekennzeichnet, daß der Schieber (11) federnd mittels Federelementen (37) an dem Dosierelement (9) angeordnet ist.

5. Schleuderstreuer nach einem oder mehreren der vorstehenden Ansprüche, dadurch gekennzeichnet, daß der Schieber (11) selbst federnd ausgebildet ist.

6. Schleuderstreuer nach einem oder mehreren der vorstehenden Ansprüche, dadurch gekennzeichnet, daß das Dosierelement (9) und der Schieber (11) eine zentrale Bohrung (12) aufweisen, daß durch diese zentrale Bohrung (12) die Rührwelle (14) geführt ist.

7. Schleuderstreuer nach einem oder mehreren der vorstehenden Ansprüche, dadurch gekennzeichnet, daß in der zentralen Bohrung (12) des Dosierelementes (9) und des Schiebers (11) eine als Verschleißelement ausgebildete Hülse (13) angeordnet ist, daß durch diese Hülse (13) die Rührwelle (14) sich erstreckt.

8. Schleuderstreuer nach einem oder mehreren der vorstehenden Ansprüche, dadurch gekennzeichnet, daß mittels der Hülse (13) und der Rührwelle (14) das Dosierelement (9) und der Schieber (11) zentriert und in ihrer vorgesehenen Position gehalten werden.

9. Schleuderstreuer nach einem oder mehreren der vorstehenden Ansprüche, dadurch gekennzeichnet, daß die Dosiereinheit (23) mittels Federelementen (33) federnd am Vorratsbehälter (2) angeordnet ist.

10. Schleuderstreuer nach Anspruch 9, dadurch gekennzeichnet, daß die Federelemente (33) als Zugfedern oder Gummischnüre ausgebildet sind, welche mittels Schnellverschlüssen am Vorratsbehälter (2) oder der Dosiereinheit (23) befestigt sind.

11. Schleuderstreuer nach einem oder mehreren der vorstehenden Ansprüche, dadurch gekennzeichnet, daß am Rahmen (1) und/oder Vorratsbehälter (2) eine Streubreitenbegrenzungseinrichtung (36) angeordnet ist, daß die Streubreitenbegrenzungseinrichtung (36) unterhalb der unteren Ebene (22) der Dosiereinheit (23) angeordnet ist.

12. Schleuderstreuer nach einem oder mehreren der vorstehenden Ansprüche, dadurch gekennzeichnet, daß die Dosiereinheit (23) mittels einer Stelleinrichtung (27) um die Rührwerkachse (26) verschwenkbar angeordnet und in unterschiedlichen Positionen fixierbar ist.

13. Schleuderstreuer nach Anspruch 12, dadurch gekennzeichnet, daß die Stelleinrichtung (27) auf der den Ankupplungselementen (5) zum Anbau an eine Zugmaschine abgewandten Seite angeordnet ist.

14. Schleuderstreuer nach einem oder mehreren der vorstehenden Ansprüche, dadurch gekennzeichnet, daß die Einstellelemente für die Betätigung des Schiebers (11) auf der Seite der Ankupplungselemente zum Anbau an eine Zugmaschine angeordnet sind.

15. Schleuderstreuer nach Anspruch 1, dadurch gekennzeichnet, daß die Dosierplatte (109) unmittelbar an den unteren Bereich (106,140) des Vorratsbehälters (2) anschließt.

16. Schleuderstreuer nach Anspruch 1, dadurch gekennzeichnet, daß die Dosierplatte (109) Führungselemente (141) aufweist, welche außerhalb des Vorratsbehälters (2) angeordnet sind und an der äußeren Ringfläche (140) des Vorratsbehälters (2) zur Anlage kommen.

17. Schleuderstreuer nach Anspruch 1, dadurch gekennzeichnet, daß der Schieber (11) an der Dosierplatte (109) befestigt ist.

## Claims

1. Centrifugal spreader, especially a road gritter for municipal and winter service, having a frame and a storage tank, in the base region of which storage tank there is disposed a metering unit, and having a centrifugal disc, which is disposed underneath the metering unit, is actuated so as to rotate and is provided with spreading elements, said centrifugal disc being disposed non-rotatably on a drive shaft, a mixer element located in the storage tank being connected to the upper end of the drive shaft by means of a bayonet coupling and the metering unit being connected detachably to the lower region of the storage tank, characterised in that the drive shaft (14, 18) terminates below the lower metering unit plane (22), and in that the metering unit (23) is disposed underneath the storage tank (2) on the latter, and in fact in such a manner that, without dismantling the storage tank (2), said metering unit is disposed so as to be removable from the storage tank (2) from the side or the rear by extraction between the storage tank (2) and the centrifugal disc (3) and so as to be attachable to said storage tank and easily accessible.

2. Centrifugal spreader according to claim 1, characterised in that the metering unit (23) is centred by the mixer shaft (14).

3. Centrifugal spreader according to claim 1, characterised in that the metering unit (23) comprises a metering element (9), for example a metering plate, which has one or more discharge openings (10), and a slide (11), which closes the discharge opening(s) (10) and sets their opening width, and in that the slide (11) is disposed on the metering element (9) so as to be easily detachable and removable.

4. Centrifugal spreader according to one or more of the preceding claims, characterised in that the slide (11) is disposed resiliently on the metering element (9) by means of spring elements (37).

5. Centrifugal spreader according to one or more of the preceding claims, characterised in that the slide (11) itself is configured to be resilient.

6. Centrifugal spreader according to one or more of the preceding claims, characterised in that the metering element (9) and the slide (11) have a central boring (12), and in that the mixer shaft (14) is guided through this central boring (12).

7. Centrifugal spreader according to one or more of the preceding claims, characterised in that a sleeve (13), which is configured as a wearing element, is disposed in the central boring (12) of the metering element (9) and of the slide (11), and in that the mixer shaft (14) extends through this sleeve (13).

8. Centrifugal spreader according to one or more of the preceding claims, characterised in that, by means of the sleeve (13) and the mixer shaft (14), the metering element (9) and the slide (11) are retained centred and in their intended position.

9. Centrifugal spreader according one or more of the preceding claims, characterised in that the metering unit (23) is disposed resiliently on the storage tank (2) by means of spring elements (33).

10. Centrifugal spreader according to claim 9, characterised in that the spring elements (33) are configured as tension springs or rubber cords which are mounted on the storage tank (2) or the metering unit (23) by means of snap closures.

11. Centrifugal spreader according to one or more of the preceding claims, characterised in that a dispersion delimiting device (36) is disposed on the frame (1) and/or on the storage tank (2), and in that the dispersion delimiting device (36) is disposed below the lower plane (22) of the metering unit (23).

12. Centrifugal spreader according to one or more of the preceding claims, characterised in that the metering unit (23) is disposed pivotally about the mixer axis (26) and is fixable in different positions by means of an adjustment device (27).

13. Centrifugal spreader according to claim 12, characterised in that the adjustment device (27) is disposed on the side orientated away from the coupling elements (5) for mounting on a towing vehicle.

14. Centrifugal spreader according to one or more of the preceding claims, characterised in that the adjustment elements for actuation of the slide (11) are disposed on the side of the coupling elements for mounting on a towing vehicle.

15. Centrifugal spreader according to claim 1, characterised in that the metering plate (109) abuts directly against the lower region (106, 140) of the storage tank (2).

16. Centrifugal spreader according to claim 1, characterised in that the metering plate (109) has guide elements (141), which are disposed externally of the storage tank (2) and abut against the exterior annular face (140) of the storage tank (2).

17. Centrifugal spreader according to claim 1, characterised in that the slide (11) is mounted on the metering plate (109).

## Revendications

1. Epandeur centrifuge notamment épandeur routier pour les travaux communaux et les travaux hivernaux, comprenant un châssis et un réservoir dont la zone du fond est munie d'une unité de dosage avec en dessous de celle-ci un disque d'épandage entraîné en rotation et muni d'éléments d'éjection, ce disque étant installé solidairement en rotation sur un arbre d'entraînement, tandis que l'extrémité supérieure de l'arbre d'entraînement est reliée par une liaison de type baïonnette à un organe agitateur placé dans le réservoir, et que l'unité de dosage est reliée de manière amovible à la partie inférieure du réservoir,
caractérisé en ce que
l'arbre d'entraînement (14, 18) se termine en dessous du plan (22) de l'unité de dosage,
l'unité de dosage (23) se trouve en dessous du réservoir d'alimentation (2) et cela de façon telle qu'elle puisse être enlevée sans démontage du réservoir (2), latéralement ou vers l'arrière du réservoir (2), par extraction entre le réservoir d'alimentation (2) et le disque d'épandage (3), ou être installée dans les mêmes conditions et être facile d'accès.

2. Epandeur centrifuge selon la revendication 1,
caractérisé en ce que
l'unité de dosage (23) est centrée par l'arbre (14) de l'agitateur.

3. Epandeur centrifuge selon la revendication 1,
caractérisé en ce que
l'unité de dosage (23) se compose d'un élément de dosage (9) ayant un ou plusieurs orifices de sortie (10), par exemple une plaque de dosage, et d'un tiroir (11) fermant et réglant le degré d'ouverture du ou des orifices de sortie (10), le tiroir (11) étant prévu sur l'élément de dosage (9) de manière à pouvoir être détaché et enlevé facilement.

4. Epandeur centrifuge selon l'une ou plusieurs des revendications précédentes,
caractérisé en ce que
le tiroir (11) est monté de façon élastique à l'aide d'éléments de ressort (37) sur l'élément de dosage (9).

5. Epandeur centrifuge selon l'une ou plusieurs des revendications précédentes,
caractérisé en ce que
le tiroir (11) est lui-même élastique.

6. Epandeur centrifuge selon l'une ou plusieurs des revendications précédentes,
caractérisé en ce que
l'élément de dosage (9) et le tiroir (11) comportent un perçage central (12) traversé par l'arbre d'agitateur (14).

7. Epandeur centrifuge selon l'une ou plusieurs des revendications précédentes,
caractérisé en ce que
le perçage central (12) de l'élément de dosage (9) et celui du tiroir (11) comportent un manchon (13) en forme d'élément d'usure qui reçoit l'arbre d'agitateur (14).

8. Epandeur centrifuge selon l'une ou plusieurs des revendications précédentes,
caractérisé en ce que
l'élément de dosage (9) et le tiroir (11) sont centrés et maintenus dans leur position prédéterminée à l'aide du manchon (13) et de l'arbre d'agitateur (14).

9. Epandeur centrifuge selon l'une ou plusieurs des revendications précédentes,
caractérisé en ce que
l'unité de dosage (23) est montée de manière élastique sur le réservoir (2) à l'aide d'éléments à ressort (33).

10. Epandeur centrifuge selon la revendication 9,
caractérisé en ce que
les éléments à ressort (33) sont en forme de ressorts de traction ou de cordons en caoutchouc fixés au réservoir (2) ou à l'unité de dosage (23) par des moyens de liaison rapide.

11. Epandeur centrifuge selon l'une ou plusieurs des revendications précédentes,
caractérisé par
une installation de limitation de largeur d'épandage (36) prévue sur le châssis (1) et/ou le réservoir (2), cette installation de limitation de largeur d'épandage (36) se trouvant en dessous du plan inférieur (22) de l'unité de dosage (23).

12. Epandeur centrifuge selon l'une ou plusieurs des revendications précédentes,
caractérisé en ce que
l'unité de dosage (23) est montée de manière pivotante autour de l'axe (26) de l'agitateur par l'intermédiaire d'une installation d'actionnement (27) et peut se bloquer dans des positions différentes.

13. Epandeur centrifuge selon la revendication 12,
caractérisé en ce que
l'installation de réglage (27) est prévue sur le côté opposé à celui des éléments d'attelage (5) pour atteler l'épandeur sur un véhicule tracteur.

14. Epandeur centrifuge selon l'une ou plusieurs des revendications précédentes,
caractérisé en ce que
les éléments de réglage de l'actionnement du tiroir (11) sont prévus sur le côté des éléments d'attelage pour le montage de l'épandeur sur un véhicule tracteur.

15. Epandeur centrifuge selon la revendication 1,
caractérisé en ce que
la plaque de dosage (109) est reliée directement à la zone inférieure (106, 140) du réservoir (2).

16. Epandeur centrifuge selon la revendication 1,
caractérisé en ce que
la plaque de dosage (109) comporte des éléments de guidage (141) prévus en dehors du réservoir (2) et venant en appui contre la surface annulaire extérieure (140) du réservoir d'alimentation (2).

17. Epandeur centrifuge selon la revendication 1,
caractérisé en ce que
le tiroir (11) est fixé à la plaque de dosage (109).
